# EUROPEAN PATENT SPECIFICATION

(11) **EP 4 197 812 B1**
(45) Date of publication and mention of the grant of the patent: **31.07.2024**
(21) Application number: 22212318.4
(22) Date of filing: 08.12.2022
(51) Int. Cl.: B60C 9/00, B60C 13/00, B60C 15/00, B60C 9/09

(54) **TIRE WITH REINFORCED SIDEWALL LAYER**
REIFEN MIT VERSTÄRKTER SEITENWANDSCHICHT
PNEU AVEC COUCHE DE FLANC RENFORCÉE

(30) Priority: 16.12.2021 US 202117552575
(43) Date of publication of application: 21.06.2023
(73) Proprietor: The Goodyear Tire & Rubber Company, Akron, OH 44316 (US)
(72) Inventor: TILL, Douglas Andrew, Akron, 44313 (US); GILLICK, James Gregory, Akron, 44313 (US); CELIK, Ceyhan, Stow, 44224 (US)
(74) Representative: Kutsch, Bernd

(56) References cited:
- EP-A1- 2 065 223
- WO-A1-2010/051299
- US-A1- 2012 097 312

## Description

### Field of the Invention

The present invention relates to a tire with a reinforced sidewall layer, preferably a light truck or off-road tire. More particularly, the tire includes a tire structure for enhancing cut and/or puncture resistance of the tire.

### Background of the Invention

With the continuing rise in popularity of light trucks and off-road vehicles, there exists a need to provide tires that have the ability to be driven on paved roads while carrying heavy loads without excessive noise yet also to be capable of being driven in heavy snow or wet roads. Often these tires will be driven in flooded and/or wet roadway conditions. Historically, tires have been able to meet one or two of the above-referenced design requirements but usually at the sacrifice of the other design features, such as cut/puncture resistance. It would be advantageous for a tire structure to reasonably resist cuts and/or punctures.

EP 2 065 223 A1 describes a tire having a carcass layer reinforced with a nylon cord having a twist of 6.35 twists per 2.54 cm and an aramid cord having a twist of 6.35 twists per 2.54 cm, and with the nylon cord and the aramid cord being twisted together with a twist of 6.35 twists per 2.54 cm.

US 2012/0097312 A1 describes a tire having a carcass layer or a spiral or zigzag belt layer reinforced with a nylon cord having a 4.5 twist, an aramid cord having a 6.7 twist, and with the nylon cord and the aramid cord being twisted together with a 6.7 twist.

### Summary of the Invention

The invention relates to a tire in accordance with claim 1.

Dependent claims refer to preferred embodiments of the invention.

A tire in accordance with a preferred aspect of the present invention includes a tread, a crown reinforcement, a carcass reinforcement with at least one ply wound about a pair of bead cores and through two sidewalls of the tire, and a cut/puncture resistant sidewall layer disposed adjacent a part of the carcass reinforcement within one of the sidewalls, the cut/puncture sidewall layer being formed of a plurality of cords, each cord including one nylon cord having S 4-8 tpi (twists per 2.54 cm), one aramid cord having Z 4-8 tpi, and the nylon cord and the aramid cord being twisted together with S 3-7 tpi.

According to another preferred aspect of the tire, the nylon cord has a S 5-7 tpi.

According to still another preferred aspect of the tire, the aramid cord has a Z 5-7 tpi.

According to yet another preferred aspect of the tire, the nylon cord and aramid cord are twisted together with S 4-6 tpi.

According to still another preferred aspect of the tire, the nylon cord has a S 6 tpi.

According to yet another preferred aspect of the tire, the aramid cord has a Z 6 tpi.

According to still another preferred aspect of the tire, the nylon cord and aramid cord are twisted together with a S 5 tpi.

According to yet another preferred aspect of the tire, the twist of the nylon cord and the twist of the aramid cord are equal.

### Brief Description of the Drawings

FIG. 1 is a schematic cross-sectional view of the tire in accordance with the present invention.
FIG. 2 is a schematic perspective view of an example tread for use with the tire of FIG. 1.
FIG. 3 is a schematic plan view of the example tread of FIG. 2.
FIG. 4 is a schematic enlarged fragmentary view of the example tread of FIG. 2.

### Definitions

As used herein and in the claims:
"Aramid" and "Aromatic polyamide" both mean a manufactured fiber in which the fiber-forming substance is generally recognized as a long chain of synthetic aromatic polyamide in which at least 85 percent of the amide linkages are attached directly to the two aromatic rings. Representative of an aramid or aromatic polyamide is a poly (p-phenyleneterephthalam ide).
"Axial" and "axially" refer to lines or directions that are parallel to the axis of rotation of the tire.
"Belt structure" means one or more layers or plies, woven or unwoven, underlying the tread, unanchored to the bead, and having cords inclined respect to the equatorial plane (EP) of the tire. The belt structure may also include plies of parallel cords inclined at relatively low angles, acting as restricting layers.
"Circumferential" and "circumferentially" mean lines or directions extending along the perimeter of the surface of the annular tire parallel to the equatorial plane (EP) and perpendicular to the axial direction.
"Cord" means one of the reinforcement strands which the reinforcement structures of the tire comprise.
"Cord angle" means the acute angle, left or right in a plan view of the tire, formed by a cord with respect to the equatorial plane (EP). The "cord angle" is measured in a cured but uninflated tire.
"Cord twist" means each yarn of the cord has its component filaments twisted together a given number of turns per unit of length of the yarn (usually expressed in turns per 2.54 cm (TPI) or turns per meter (TPM)) and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S", then the twist is called "S" or "left hand". If the slope of the spirals conforms in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.
"Denier" means the weight in grams per 9000 meters (unit for expressing linear density).
"Dtex" means the weight in grams per 10,000 meters.
"Equatorial plane (EP)" means the plane perpendicular to the tire's axis of rotation and passing through the center of its tread; or the plane containing the circumferential centerline of the tread.
"Fabric" means a network of essentially unidirectionally extending cords, which may be twisted, and which in turn are composed of a plurality of a multiplicity of filaments (which may also be twisted) of a high modulus material.
"Fiber" is a unit of matter, either natural or man-made, that forms the basic element of filaments; characterized by having a length at least 100 times its diameter or width.
"Filament count" means the number of filaments that make up a yarn. Example: 1000 denier polyester has approximately 190 filaments.
"Lateral" means an axial direction.
"Monofilament" means a single, generally large filament of synthetic fiber
"Outboard side" means the side of the tire farthest away from the vehicle when the tire is mounted on a wheel and the wheel is mounted on the vehicle.
"Ply" means a cord-reinforced layer of rubber-coated radially deployed or otherwise parallel cords.
"Radial" and "radially" mean directions radially toward or away from the axis of rotation of the tire.
"Sidewall insert" means elastomer or cord reinforcements located in the sidewall region of a tire. The insert may be an addition to the carcass reinforcing ply and outer sidewall rubber that forms the outer surface of the tire.
"Sidewall" means that portion of a tire between the tread and the bead.
"Turns per 2.54 cm", or TPI, means turns of cord twist for each inch length of cord.
"Yarn" is a generic term for a continuous strand of textile fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

### Detailed Description of Preferred Embodiments of the Invention

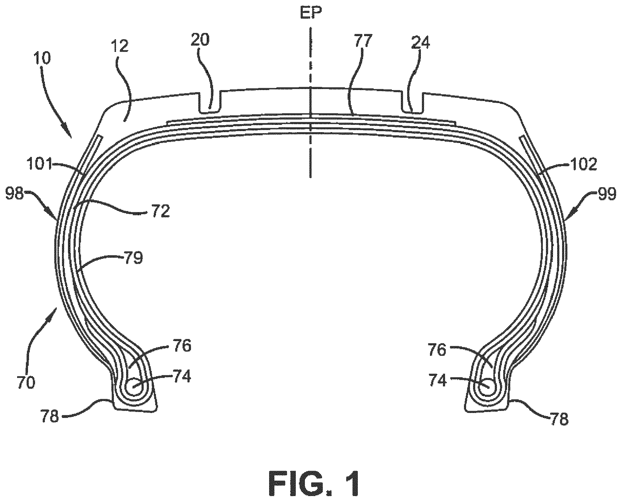

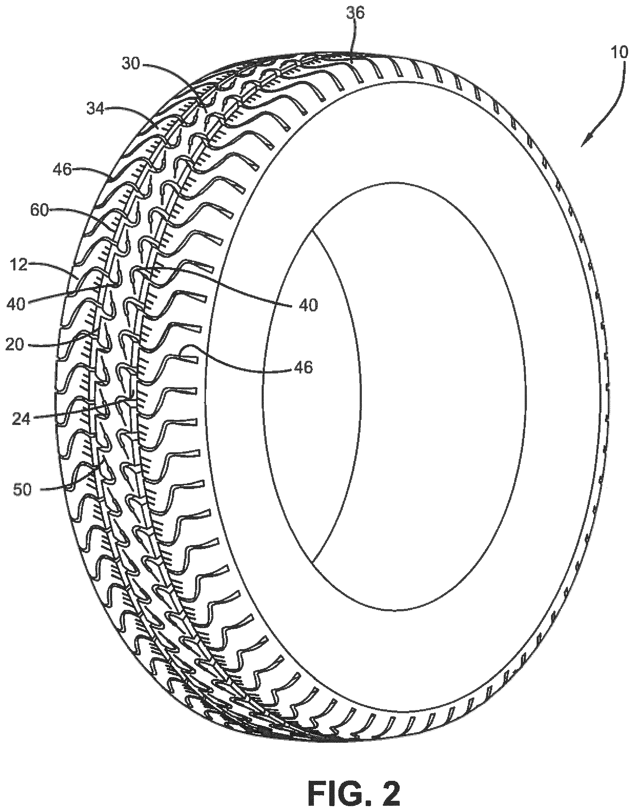

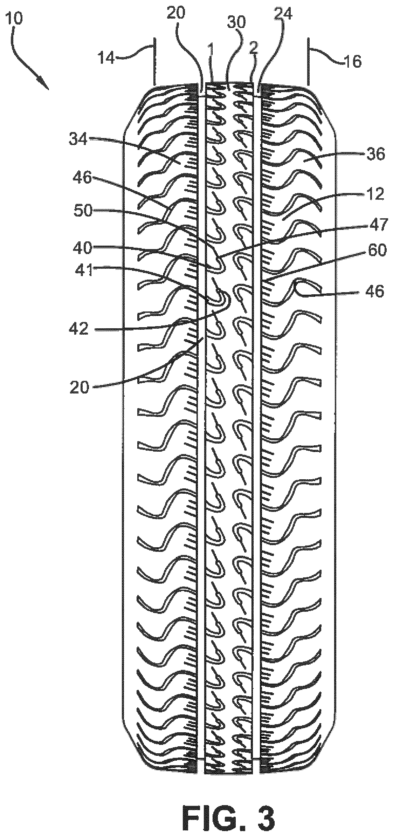

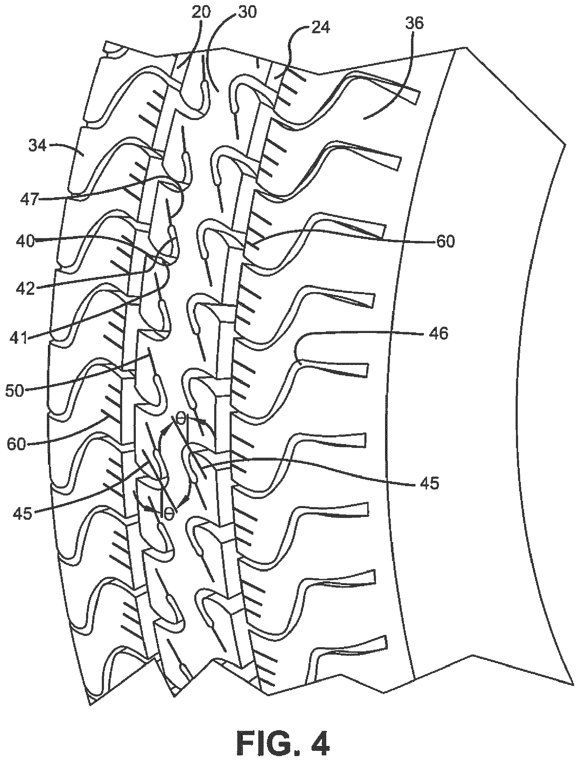

With the reference to FIGS. 1 through 4, a tire 10 in accordance with the present invention is shown. The tire 10 has a tread 12 having, when configured annularly, an axis of rotation and first and second lateral edges 14, 16. The tire includes a carcass 70 with one or more plies 72 reinforced by preferably radially extending synthetic or metal cords and a pair of substantially inextensible bead cores 74, preferably an apex 76 radially outward from the bead cores 74, and preferably a belt structure 77 radially outward from the plies 72. The tire 10 preferably further has an air impervious innerliner 79 such as a halobutyl innerliner and a rubber chafer 78 as it is common in tubeless type tires.

The tread 12 preferably has two circumferentially continuous grooves 20, 24. Interposed between the two circumferentially continuous grooves is a rib 30 extending continuously around the circumference of the tread 12. The rib 30 preferably has a plurality of circumferentially spaced hook-shaped semi-blind grooves 40 arranged in a first row 1 and a second row 2. The hook-shaped semi-blind grooves 40 of the first row 1 preferably originate at the circumferentially continuous groove 20 and the hook-shaped semi-blind grooves 40 of the second row 2 preferably originate from the circumferentially continuous groove 24. Each hook-shaped semi-blind groove 40 preferably extends obliquely into the rib 30, having a first open portion 41 intersecting a circumferential groove 20, 24 and a blind portion 42 extending from the open portion 41. A centerline 45 bisecting the two portions 41, 42 as used herein may define the inclination of the hook-shaped semi-blind grooves 40.

The centerline 45 of the hook-shaped semi-blind grooves 40 is preferably inclined at an angle Θ in the range of from 30 degrees to 60 degrees relative to the equatorial plane EP of the tire 10. The equatorial plane EP lies midway between a pair of lateral tread edges 14, 16 and perpendicular to the axis of rotation of the tire 10. The blind portion 42 preferably extends to an end 47 at which point a sipe incision 50 extends further. The sipe incision 50 preferably has no or only a small width and is accordingly preferably closed when in the contact patch. The hook-shaped semi-blind grooves 40 preferably has a width in the range of from 2 mm to 9 mm. The width of the hook-shaped semi-blind grooves 40 preferably diminishes continuously from the groove portion adjacent the circumferentially extending grooves 20, 22, 24 toward the interior of the rib 30 and preferably varies between 5.0 mm and 7.5 mm at the intersection of the circumferentially continuous groove, and the width at the end portion of the semi-blind grooves preferably varies between 2.0 mm and 2.5 mm.

The orientation of the hook-shaped semi-blind grooves 40 allows to direct fluids laterally inwardly and expel the fluid as the tire 10 rotates in the generally circumferential direction. Similarly, noise generated by the tread 10 at the rib 30 is at least partially directed laterally inwardly and is expelled as the tire 10 rotates circumferentially from the blind portion 42.

The shoulders of the tread 12 adjacent each lateral tread edge 14, 16 preferably have a rib 34, 36. The ribs 34, 36 preferably each have a plurality of circumferentially spaced curved grooves 46. Each curved groove 46 preferably originates at a circumferentially continuous groove 20, 24 and at its origin the curved groove 46 are preferably linearly aligned with a hook-shaped semi-blind groove 40 such that the originating open portion 41 is inclined similarly to the originating portion of the curved groove 46. The curved groove 46 may bend about 90 degrees relative to its origin and then open laterally over the tread shoulders. In each bend of the curved groove 46 may be a tie bar.

Yarn and cord twisting is done using any appropriate equipment. A balanced twist, that is, where the ply (yarn) twist is essentially equal to the cable (cord) twist, has been conventionally used. However, an unbalanced cord twist may be used as the physical properties and fatigue life are typically dominated by the cable twist, not the yarn ply twist. An exemplary yarn Denier of 500 to 6000 may be used. The Denier per filament is preferably 2 dpf (Denier per 30.48 cm), or of from 5 Denier per 30.48 cm to 10 Denier per 30.48 cm.

When cords have unbalanced S and Z twists used alternately in the cord fabric, the torques formed in dipped and calendered cord fabric in S and Z directions may offset/neutralize each other and eliminate processing challenges. The Z and S twisted alternate cords may also be utilized in steel cord plies. Conventionally, no more than five unbalanced twist S cords or five unbalanced twist Z cords may be adjacent to each other in a fabric, unless other measures are used to neutralize the torque imbalances of the cords in the fabric. Otherwise, roll up issues may be encountered.

For example, some conventional plies have included cords with reduced yarn twist while maintaining the conventional cord twist. When a Z ply twist of 197 tpm (turns per meter) (5 tpi (turns per inch)) is used, an S cord twist of 334 tpm to 472 tpm (8.5 to 12 tpi) may be used. In another example, yarn twists of 118 tpm to 472 tpm (3 to 12 tpi) may be used as long as the twist multiplier (TM) is 10 or less and the yarn twist is maintained less than the cord twist. It has been found, however, that treated fabric and reinforced rubber composites made with such cords may be difficult to process since the residual torque, caused by the unbalanced twist in the cords, causes the treated fabric, and sometimes the fabric reinforced composite, to roll up at the edges.

As shown in FIG. 1, the tire 10 in accordance with the present invention includes a reinforcement structure 101, 102 disposed in each sidewall 98, 99 of the tire 10. The reinforcement structures 101, 102 each define a compliant aramid/nylon hybrid fabric layer enabling sidewall impact energy to dissipate through the reinforcement structures 101, 102. By dissipating more energy through compliance, each sidewall 98, 99 helps to avoid tearing damage for projectiles to the tire 10. Hybrid cord constructions of a compliant aramid/nylon hybrid fabric 101, 102 preferably have unbalanced cord twists which accentuate the extensibility of the nylon in the hybrid during low strains of the load elongation curves of the constructions 101, 102, as similarly shown in U.S. Patent Nos. 9,688,100 and 6,959,534.

During deformation of the tire sidewalls 98, 99, low loads at low elongation allow the reinforcement structures 101, 102 to elongate and envelop potentially damaging projectiles. With high strain, cutting types of damage, the higher aramid modulus and higher break strength allows the sidewalls 98, 99 to avoid damage incurred by conventional structures.

Thus, in accordance with the present invention, aramid and nylon cords have a lower twist for promoting this enveloping puncture resistance while the overall hybrid cord has a higher twist for promoting cut resistance.

One example cord includes one nylon cord having S 4-8 tpi (twists per 2.54 cm), one aramid cord having Z 4-8 tpi, and the two cords twisted together with S 3-7 tpi.

Another example cord includes one nylon cord having Z 4-8 tpi (twists per 2.54 cm), one aramid cord having S 4-8 tpi, and the two cords twisted together with Z 3-7 tpi.

The example cord, with the unbalanced twist, thereby exhibits a load elongation curve with extensibility similar to nylon in the low elongation part of the curve and high modulus and cut resistance of similar to aramid in the high elongation part of the curve. The cord thus exhibits both compliance and cut resistance.

## Claims

1. A tire comprising a tread (12), a crown reinforcement (77), a carcass reinforcement with at least one ply (72) wound about a pair of bead cores (74) and through two sidewalls (98, 99) of the tire (10), wherein the tire (10) further comprises a sidewall layer as a reinforcement structure (101, 102) disposed adjacent a part of the carcass reinforcement (72) within at least one of the sidewalls (98, 99), the sidewall layer comprising a plurality of cords, each cord including:
(i) one nylon cord having an S twist with from 4 to 8 twists per 2.54 cm, one aramid cord having a Z twist with from 4 to 8 twists per 2.54 cm, and the nylon cord and the aramid cord being twisted together with an S twist having from 3 to 7 twists per 2.54 cm; or
(ii) one nylon cord having an Z twist with from 4 to 8 twists per 2.54 cm, one aramid cord having a S twist with from 4 to 8 twists per 2.54 cm, and the nylon cord and the aramid cord being twisted together with an Z twist having from 3 to 7 twists per 2.54 cm;
and wherein the twists per 2.54 cm of the nylon cord and the twists per 2.54 cm of the aramid cord are lower than the twists per 2.54 cm the nylon cord and the aramid cord are twisted together.

2. The tire of claim 1 wherein the sidewall layer is cut resistant and/or puncture resistant.

3. The tire of claim 1 or 2 wherein each of the two sidewalls (98, 99) of the tire (10) comprises said sidewall layer comprising said plurality of cords.

4. The tire of claim 1 or 2 wherein only the sidewall (98, 99) on the axially outer side of the tire (10) when the tire (10) is mounted to a vehicle in accordance with its specification has said sidewall layer comprising said plurality of cords.

5. The tire of claim 1 wherein the nylon cord has an S or Z twist respectively with from 5 to 7 twists per 2.54 cm.

6. The tire of claim 1 wherein the aramid cord has an Z or S twist respectively with from 5 to 7 twists per 2.54 cm.

7. The tire of claim 1 wherein the nylon cord and the aramid cord are twisted together with an S or Z twist respectively with from 4 to 6 twists per 2.54 cm.

8. The tire of claim 1 wherein the nylon cord has an S or Z twist respectively with 6 twists per 2.54 cm.

9. The tire of claim 1 wherein the aramid cord has an Z or S twist respectively with 6 twists per 2.54 cm.

10. The tire of claim 1 wherein the nylon cord and the aramid cord are twisted together with an S or Z twist respectively with 5 twists per 2.54 cm.

11. The tire in accordance with at least one of the previous claims wherein the twists per 2.54 cm of the nylon cord and the twists per 2.54 cm of the aramid cord are equal.

12. The tire in accordance with at least one of the previous claims wherein the twist per 2.54 cm of the nylon cord and the twist per 2.54 cm of the aramid cord is each from 0.5 to 2 twists per 2.54 cm lower than the twist per 2.54 cm the nylon cord and the aramid cord are twisted together.

13. The tire in accordance with at least one of the previous claims wherein the twist per 2.54 cm of the nylon cord and the twist per 2.54 cm of the aramid cord is each 1 twist per 2.54 cm lower than the twist per 2.54 cm the nylon cord and the aramid cord are twisted together.

14. The tire in accordance with at least one of the previous claims wherein the sidewall layer is an aramid/nylon hybrid fabric layer.

## Patentansprüche

1. Reifen, der eine Lauffläche (12), eine Zenitverstärkung (77), eine Karkassenverstärkung, die mindestens eine Lage (72) umfasst, die um ein Paar Wulstkerne (74) und durch zwei Seitenwände (98, 99) des Reifens (10) gewickelt ist, umfasst, wobei der Reifen (10) ferner eine Seitenwandschicht als eine Verstärkungsstruktur (101, 102) umfasst, die angrenzend an einen Teil der Karkassenverstärkung (72) innerhalb mindestens einer der Seitenwände (98, 99) angeordnet ist, wobei die Seitenwandschicht eine Vielzahl von Korden umfasst, wobei jeder Kord einschließt:
einen Nylonkord, der eine S-Drehung mit 4 bis 8 Drehungen pro 2,54 cm aufweist, einen Aramidkord, der eine Z-Drehung mit 4 bis 8 Drehungen pro 2,54 cm aufweist, wobei der Nylonkord und der Aramidkord, die eine S-Drehung mit 3 bis 7 Drehungen pro 2,54 cm aufweisen, zusammenverdreht sind; oder
einen Nylonkord, der eine Z-Drehung mit 4 bis 8 Drehungen pro 2,54 cm aufweist, einen Aramidkord, der eine S-Drehung mit 4 bis 8 Drehungen pro 2,54 cm aufweist, wobei der Nylonkord und der Aramidkord, die eine Z-Drehung mit 3 bis 7 Drehungen pro 2,54 cm aufweisen, zusammenverdreht sind;
und wobei die Verdrehungen pro 2,54 cm des Nylonkordes und die Verdrehungen pro 2,54 cm des Aramidkordes geringer sind als die Verdrehungen pro 2,54 cm mit denen der Nylonkord und der Aramidkord zusammen verdreht sind.

2. Reifen nach Anspruch 1, wobei die Seitenwandschicht schnittfest und/oder durchstichfest ist.

3. Reifen nach Anspruch 1 oder 2, wobei jede der beiden Seitenwände (98, 99) des Reifens (10) die Seitenwandschicht umfasst, die die Vielzahl von Korden umfasst.

4. Reifen nach Anspruch 1 oder 2, wobei nur die Seitenwand (98, 99) auf der axial äußeren Seite des Reifens (10), wenn der Reifen (10) gemäß seiner Spezifikation an einem Fahrzeug montiert ist, die Seitenwandschicht aufweist, die die Vielzahl von Korden umfasst.

5. Reifen nach Anspruch 1, wobei der Nylonkord eine S- bzw. Z-Drehung mit 5 bis 7 Drehungen pro 2,54 cm aufweist.

6. Reifen nach Anspruch 1, wobei der Aramidkord eine Z- bzw. S-Drehung mit 5 bis 7 Drehungen pro 2,54 cm aufweist.

7. Reifen nach Anspruch 1, wobei der Nylonkord und der Aramidkord mit einer S- bzw. Z-Drehung mit 4 bis 6 Drehungen pro 2,54 cm zusammenverdreht sind.

8. Reifen nach Anspruch 1, wobei der Nylonkord eine S- bzw. Z-Drehung mit 6 Drehungen pro 2,54 cm aufweist.

9. Reifen nach Anspruch 1, wobei der Aramidkord eine Z- bzw. S-Drehung mit 6 Drehungen pro 2,54 cm aufweist.

10. Reifen nach Anspruch 1, wobei der Nylonkord und der Aramidkord mit einer S- bzw. Z-Drehung mit 5 Drehungen pro 2,54 cm zusammenverdreht sind.

11. Reifen nach mindestens einem der vorhergehenden Ansprüche, wobei die Verdrehungen pro 2,54 cm des Nylonkords und die Verdrehungen pro 2,54 cm des Aramidkords gleich sind.

12. Reifen nach mindestens einem der vorhergehenden Ansprüche, wobei die Verdrehung pro 2,54 cm des Nylonkords und die Verdrehung pro 2,54 cm des Aramidkords jeweils um 0,5 bis 2 Verdrehungen pro 2,54 cm geringer ist als die Verdrehung pro 2,54 cm mit denen der Nylonkord und der Aramidkord zusammen verdreht sind.

13. Reifen nach mindestens einem der vorhergehenden Ansprüche, wobei die Verdrehung pro 2,54 cm des Nylonkords und die Verdrehung pro 2,54 cm des Aramidkords jeweils 1 Verdrehung pro 2,54 cm geringer ist als die Verdrehung pro 2,54 cm mit denen der Nylonkord und der Aramidkord zusammen verdreht sind.

14. Reifen nach mindestens einem der vorhergehenden Ansprüche, wobei die Seitenwandschicht eine Aramid/Nylon-Hybridgewebeschicht ist.

## Revendications

1. Bandage pneumatique qui comprend une bande de roulement (12), un renforcement de sommet (77), un renforcement de carcasse comprenant au moins une nappe (72) qui est enroulée autour d'une paire de tringles de talons (74) et à travers deux flancs (98, 99) du bandage pneumatique (10), dans lequel le bandage pneumatique (10) comprend en outre une couche de flanc qui fait office de structure de renforcement (101, 102) disposée en position adjacente à une partie du renforcement de carcasse (72) au sein d'au moins un des flancs (98, 99), la couche de flanc comprenant un certain nombre de câblés, chaque câblé englobant :
(i) un câblé en nylon qui possède une torsion de type S avec de 4 à 8 torsions par 2,54 cm, un câblé en aramide qui possède une torsion de type Z avec de 4 à 8 torsions par 2,54 cm, et le câblé en nylon et le câblé en aramide étant torsadés l'un avec l'autre avec une torsion de type S qui possède de 3 à 7 torsions par 2,54 cm ; ou
(ii) un câblé en nylon qui possède une torsion de type Z avec de 4 à 8 torsions par 2,54 cm, un câblé en aramide qui possède une torsion de type S avec de 4 à 8 torsions par 2,54 cm, et le câblé en nylon et le câblé en aramide étant torsadés l'un avec l'autre avec une torsion de type Z qui possède de 3 à 7 torsions par 2,54 cm ;
et dans lequel les torsions par 2,54 cm du câblé en nylon et les torsions par 2,54 cm du câblé en aramide sont inférieures aux torsions par 2,54 cm avec lesquelles le câblé en nylon et le câblé en aramide sont torsadés l'un avec l'autre.

2. Bandage pneumatique selon la revendication 1, dans lequel la couche de flanc résiste aux coupures et/ou résiste aux perforations.

3. Bandage pneumatique selon la revendication 1 ou 2, dans lequel chacun des deux flancs (98, 99) du bandage pneumatique (10) comprend ladite couche de flanc qui comprend lesdits plusieurs câblés.

4. Bandage pneumatique selon la revendication 1 ou 2, dans lequel seul le flanc (98, 99) qui est situé sur le côté externe, dans la direction axiale, du bandage pneumatique (10) lorsque le bandage pneumatique (10) est monté sur un véhicule en conformité avec sa spécification, possède ladite couche de flanc qui comprend lesdits plusieurs câblés.

5. Bandage pneumatique selon la revendication 1, dans lequel le câblé en nylon possède une torsion de type S ou de type Z, respectivement, avec de 5 à 7 torsions par 2,54 cm.

6. Bandage pneumatique selon la revendication 1, dans lequel le câblé en aramide possède une torsion de type Z ou de type S, respectivement, avec de 5 à 7 torsions par 2,54 cm.

7. Bandage pneumatique selon la revendication 1, dans lequel le câblé en nylon et le câblé en aramide sont torsadés l'un avec l'autre une torsion de type S ou de type Z, respectivement, avec de 4 à 6 torsions par 2,54 cm.

8. Bandage pneumatique selon la revendication 1, dans lequel le câblé en nylon possède une torsion de type S ou de type Z, respectivement, avec 6 torsions par 2,54 cm.

9. Bandage pneumatique selon la revendication 1, dans lequel le câblé en aramide possède une torsion de type Z ou de type S, respectivement, avec 6 torsions par 2,54 cm.

10. Bandage pneumatique selon la revendication 1, dans lequel le câblé en nylon et le câblé en aramide sont torsadés l'un avec l'autre avec une torsion de type S ou de type Z, respectivement, avec 5 torsions par 2,54 cm.

11. Bandage pneumatique selon au moins une des revendications précédentes, dans lequel les torsions par 2,54 cm du câblé en nylon et les torsions par 2,54 cm du câblé en aramide sont égales.

12. Bandage pneumatique selon au moins une des revendications précédentes, dans lequel la torsion par 2,54 cm du câblé en nylon et la torsion par 2,54 cm du câblé en aramide sont chacune inférieures à raison de 0,5 à 2 torsions par 2,54 cm par rapport à la torsion par 2,54 cm avec laquelle le câblé en nylon et le câblé en aramide sont torsadés l'un à l'autre.

13. Bandage pneumatique selon au moins une des revendications précédentes, dans lequel la torsion par 2,54 cm du câblé en nylon et la torsion par 2,54 cm du câblé en aramide sont chacune inférieures à raison de 1 torsion par 2,54 cm par rapport à la torsion par 2,54 cm avec laquelle le câblé en nylon et le câblé en aramide sont torsadés l'un à l'autre.

14. Bandage pneumatique selon au moins une des revendications précédentes, dans lequel la couche de flanc est une couche de tissu hybride à base d'aramide/nylon.
